# EUROPEAN PATENT APPLICATION

(11) **EP 3 495 593 A1**
(43) Date of publication of application: **12.06.2019**
(21) Application number: 17836665.4
(22) Date of filing: 05.07.2017
(51) Int. Cl.: E05F 15/43, B60J 1/00, B60J 1/17, E05F 15/689

(54) **WINDOW GLASS RAISING AND LOWERING DEVICE FOR VEHICLE, VEHICLE DOOR, AND VEHICLE**

(30) Priority: 04.08.2016 JP 2016153568
(71) Applicant: Mitsuba Corporation, Kiryu-shi, Gunma 376-8555 (JP)
(72) Inventor: IKEDA, Hiroyuki, Ueda-shi Nagano 386-0406 (JP); TAKEHARA, Hideaki, Ueda-shi Nagano 386-0406 (JP); SAITO, Yasuhiro, Ueda-shi Nagano 386-0406 (JP); UMEHARA, Sadaji, Ueda-shi Nagano 386-0406 (JP); KONDO, Tsuyoshi, Ueda-shi Nagano 386-0406 (JP); YOSHIZAWA, Masakane, Ueda-shi Nagano 386-0406 (JP); KASHIWAGI, Hideaki, Ueda-shi Nagano 386-0406 (JP); KOBAYASHI, Mayu, Ueda-shi Nagano 386-0406 (JP)
(74) Representative: Betten & Resch
(86) International application number: PCT/JP2017/024604
(87) International publication number: WO 2018/025558

(57) **Abstract**

A window glass raising and lowering device 1 for a vehicle is provided with: a drive unit 4 for generating drive force to raise and lower a window glass 3; a control unit 5 for controlling the drive unit 4; a detection line 6 provided farther inside passenger compartment than the window glass 3; a light source 8 for radiating non-visible light to the detection line 6; and a camera 7 onto which the non-visible light radiated from the light source 8 and reflected by the detection line 6 is incident, the control unit 5 having a pinch protection unit 52 for preventing pinching by the window glass 3, and the detection line 6 having a reflective layer for reflecting the incident light in the direction of the light source 8.

## Description

### Field of Invention

The invention relates to a vehicle window glass raising/lowering device, a vehicle door, and a vehicle.

### Background Art

A vehicle window glass raising/lowering device which raises and lowers a vehicle window glass of a door automatically is known.

The vehicle window glass raising/lowering device includes a driving unit for generating a driving force for raising and lowering the window glass and a control unit for controlling the driving unit. Since the window glasses are electrically raised or lowered, the vehicle window glass raising/lowering devices are generally provided with a mechanism to prevent pinching by window glass.

As a vehicle window glass raising/lowering device, the present applicant has proposed a vehicle window glass raising/lowering device that includes a camera for imaging the detection line provided along the window frame and that causes a driving mechanism to perform a pinch preventing operation for preventing pinching in a window glass, when at least a part of the detection line imaged by the camera is shielded by a foreign object (see PTL 1).

PTL 1 discloses a vehicle window glass raising/lowering device including a light source section having a plural light emitting elements for emitting infrared light toward a detection line. In this vehicle window glass raising/lowering device, by imaging infrared light radiated from the plural light emitting elements and reflected by the detection line with a camera arranged in the vicinity of the light source section, it is possible to detect a foreign object which may be pinched even at night, etc.

### Citation List

### Patent Literature

PTL 1: JP 5768202 B

### Summary of Invention

### Technical Problem

By the way, in the vehicle window glass raising/lowering device including a pinch prevention mechanism as disclosed in PTL 1, in order to reliably detect a foreign object that may be caught, it is desirable to configure the detection line so that a light from the light source is reflected in a specific direction (the direction in which the camera exists) since the light from the light source is reflected by the detection line and captured by the camera.

It is an object of the invention to provide a vehicle window glass raising/lowering device that can reliably detect a foreign object that may be caught, as well as a vehicle door and a vehicle using the vehicle window glass raising/lowering device.

### Solution to Problem

According to an embodiment of the invention, a vehicle window glass raising/lowering device comprises:
a drive unit arranged on a vehicle door to move a window glass in a vertical direction;
a control unit for controlling the drive unit;
a detection line arranged on a vehicle interior side of the window glass and along at least a portion of an outer edge of the window glass in a state where the door and the window glass are closed;
a light source comprising a light emitting element to emit an invisible light to the detection line; and
a camera comprising a lens on which the invisible light emitted from the light source and reflected by the detection line is incident,
wherein the control unit comprises a pinching prevention means that causes the drive unit to perform a pinch prevention operation for preventing pinching by the window glass based on an image taken by the camera, and
wherein the detection line comprises a reflection layer to reflect an incident light toward the light source.

According to another embodiment of the invention, a vehicle door comprises the vehicle window glass raising/lowering device described above.

According to another embodiment of the invention, a vehicle comprises the vehicle door described above.

### Effects of Invention

According to an embodiment of the invention, it is possible to provide a vehicle window glass raising/lowering device that can reliably detect a foreign object that may be caught, as well as a vehicle door and a vehicle using the vehicle window glass raising/lowering device.

### Brief Description of Drawings

FIG. 1 is an explanatory diagram illustrating a vehicle window glass raising/lowering device in an embodiment of the present invention.
FIG. 2 is an explanatory diagram illustrating a door when viewed from the upper side inside a vehicle.
FIG. 3 is an explanatory diagram illustrating the door when viewed from the lower-front side of the vehicle.
FIG. 4A is cross-sectional view in which the door is cut in the vertical direction at the position including the camera.
FIG. 4B is a view for explaining the installation position of the camera unit shown in FIG. 4A.
FIG. 5A is cross-sectional view showing the configuration of the detection line.
FIG. 5B is an explanatory diagram illustrating a microbead-type retroreflective material.
FIG. 6 is a cross-sectional view of a detection line schematically shown for explaining a visible light and an infrared light incident on a detection line.
FIG. 7 is a schematic cross-sectional view for explaining a visible light and an infrared light incident on a detection line in a detection line according to a comparative example.
FIG. 8A is an explanatory view showing a state of a vehicle irradiated with a headlight from a position behind the vehicle.
FIG. 8B is a cross-sectional view of a detection line mounted on a vehicle irradiated with the headlight shown in FIG. 8A, taken along the vehicle longitudinal direction.
FIG. 9A is an explanatory view showing a state of a vehicle irradiated with a headlight from a position on the side of the vehicle.
FIG. 9B is a cross-sectional view of a detection line mounted on a vehicle irradiated with a headlight, taken along the vehicle longitudinal direction.
FIG. 10A is an explanatory view showing a detection line according to the present embodiment.
FIG. 10B is an explanatory view showing a detection line according to a comparative example.
FIG. 11 is a flowchart showing a control flow of a vehicle window glass raising/lowering device.

### Description of Embodiments

### Embodiment

An embodiment of the invention will be described below in reference to the drawings.

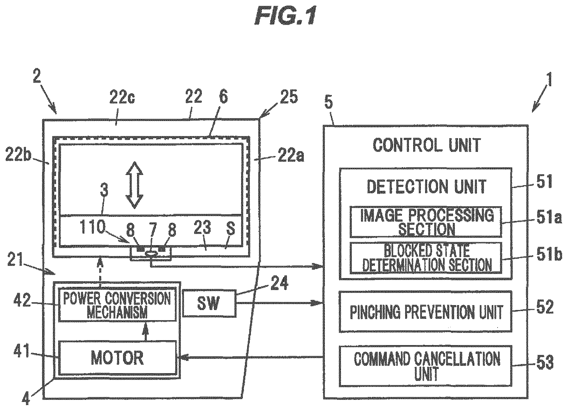

FIG.1 is an explanatory diagram illustrating a vehicle window glass raising/lowering device in the present embodiment.

A door 2 of a vehicle(vehicle door) mounting a vehicle window glass raising/lowering device 1 has a storage portion 21 for housing a window glass 3 and a windowpane frame portion 22 provided above the storage portion 21. A door trim 23 is attached on the vehicle interior side of the storage portion 21 so as to cover the storage portion 21.

The windowpane frame portion 22 is composed of a rear upright portion 22a extending upwards from an end of the storage portion 21 on the rear side in the front-back direction of the vehicle, a front upright portion 22b extending upwards from the storage portion 21 on the front side with respect to the rear upright portion 22a, and an upper extended portion 22c extending from the top end of the rear upright portion 22a to the top end of the front upright portion 22b. When the window glass 3 is fully closed, the window glass 3 is positioned in a space surrounded by the windowpane frame portion 22 and the upper edge portion of the door trim 23. That is, the windowpane frame portion 22 and the upper end portion of the door trim 23 constitute the window frame 25. In the present embodiment, the window frame 25 refers to a portion in contact with an outer edge of the window glass 3 in a state where the door 2 and the window glass 3 are closed in the fully closed state.

The vehicle window glass raising/lowering device 1 includes a drive mechanism 4 for moving the window glass 3 between an open position and a closed position with respect to a frame portion (a window frame 25) having an opening 25a and a control unit 5 for controlling the drive mechanism 4.

The drive mechanism 4 is to move the window glass 3 vertically relative to the windowpane frame portion 22, and is provided with a motor 41 such as DC motor and a power conversion mechanism 42 for converting a drive force of the motor 41 into power to vertically move the window glass 3. The power conversion mechanism 42 which can be used here is, e.g., a window regulator which is provided with a carrier plate supporting the window glass 3 and sliding along a guide rail and is configured to slide a wire along the guide rail by a drive force of the motor 41 and thereby to vertically move the carrier plate attached to the wire and the window glass 3 along the guide rail. An X-Arm type or another type of regulator can be also used as the power conversion mechanism 42.

A switch (SW) 24 is provided on the door 2 to open/close the window glass 3. An output signal line of the switch 24 is connected to the control unit 5. The switch 24 is constructed from, e.g., a two-stage click-type rocker switch which is configured to output a signal to the control unit 5, such that a first-level move-down click signal is output when an end on the move-down side is clicked to the first level, a second-level move-down click signal is output when the end on the move-down side is clicked to the second level, a first-level move-up click signal is output when the other end on the move-up side is clicked to the first level, and a second-level move-up click signal is output when the other end on the move-up side is clicked to the second level.

The control unit 5 controls the drive unit 4 according to the signal from the switch 24 to vertically move the window glass 3. The control unit 5, as a control unit constructed by appropriately combining CPU, memory, interface and software, etc., is mounted on the door 2. Other than on the door 2, the control unit 5 may alternatively be mounted as a part of, e.g., an electronic control unit (ECU) which controls mirrors or seats of the vehicle.

The control unit 5 is configured to control the drive unit 4 such that when a first-level move-down click signal is input from the switch 24, the window glass 3 is lowered during when the signal is being input, and when a second-level move-down click signal is input, the window glass 3 continues to move down until the window glass 3 reaches the bottom or the switch 24 is operated again. Also, the control unit 5 controls the drive unit 4 such that when a first-level move-up click signal is input from the switch 24, the window glass 3 is raised during when the signal is being input, and when a second-level move-up click signal is input, the window glass 3 continues to move up until the window glass 3 reaches the top or the switch 24 is operated again.

Next, a configuration to prevent pinching by the window glass 3 will be described.

The vehicle window glass raising/lowering device 1 includes a detection line 6 arranged on the vehicle interior side of the window glass 3 along at least a part of an outer edge of the window glass 3 in a state where the door 2 and the window glass 3 are closed. In the present embodiment, the detection line 6 is formed by a retroreflective material along at least a part of the frame portion (the window frame 25).

The vehicle window glass raising/lowering device 1 includes a light source section 8 that emits an invisible light to the detection line 6 and a camera 7 having an optical system 71 on which the invisible light radiated from the light source section 8 and reflected by the detection line 6 is incident. In the present embodiment, it is determined whether or not there is a foreign object that may be caught by the window glass 3 based on an image captured by the camera 7.

In the present embodiment, as the light source section 8, one that irradiates near infrared light was used. The camera 7 is composed of an image sensor that images near infrared light irradiated from the light source section 8 and reflected by the detection line 6. Since the light source section 8 are provided, a foreign object to be possibly pinched can be detected also during the night, or in a dark place even in a daytime where infrared light does not reach, e.g., in an underground parking, etc.

The detection line 6 is a reference line for judging the existence of a foreign object to be possibly pinched by the window glass 3, and is provided on the vehicle interior side with respect to the window glass 3 in a state where the door 2 and the window glass 3 are closed. A specific configuration and setting position of the detection line 6 will be described later.

The control unit 5 includes a detection unit 51 that detects a shielding state in which at least a part of the detection line 6 imaged by the camera 7 is shielded by a foreign object and an pinching prevention unit 52 that causes the drive unit 4 to perform an entrapment prevention operation for preventing pinching by the window glass 3 when the shielding state is detected by the detection unit 51 when the window glass 3 is moved by the driving unit 4. The detection unit 51 is one embodiment of a detection means of the present invention, and the pinching prevention unit 52 is one embodiment of a pinching prevention means.

The detection unit 51 is provided with an image processing section 51a which processes an image captured by the camera 7 and extracts the detection line 6, and a blocked state determination section 51b which determines, based on the image processed by the image processing section 51a, whether or not it is the blocked state in which the detection line 6 is at least partially blocked by a foreign object.

A specific method of extracting the detection line 6 by the image processing section 51a is not specifically limited. For example, when an unnecessary portion is removed by trimming the image captured by the camera 7 and posterization process, binarization process or edge detection process is performed, the detection line 6 with brightness different from surrounding members can be extracted.

The blocked state determination section 51b is configured that, for example, an image in a non-blocked state (which is an image after being processed by the image processing section 51a) is preliminarily stored as an initial state image, and whether or not the detection line 6 is blocked by a foreign object is determined by comparing the initial state image to an image output from the image processing section 51a.

The pinching prevention unit 52 causes the drive unit 4 to perform a pinch prevention operation for preventing pinching by the window glass 3 when the blocked state is detected by the detection unit 51 during when the window glass 3 is moved by the drive unit 4. The pinch prevention operation includes an operation of stopping movement of the window glass 3, an operation of lowering the window glass 3 to a safe position, an operation of warning an operator by sound or light from an alarm device installed inside the vehicle, and a combination thereof.

The control unit 5 is further provided with a command cancellation unit 53 which cancels a command from the switch 24 when the blocked state is detected by the detection unit 51 after a command to move the window glass 3 is issued from the switch 24 but before the window glass 3 starts to move. Since the command cancellation unit 53 is provided, the window glass 3 does not move during when the blocked state is detected, and safety is thus further improved.

Next, specific configurations, etc., of the camera 7 and the light source section 8 will be described.

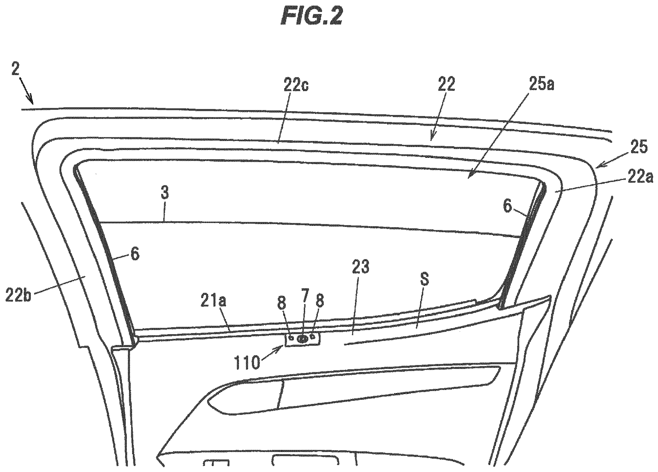

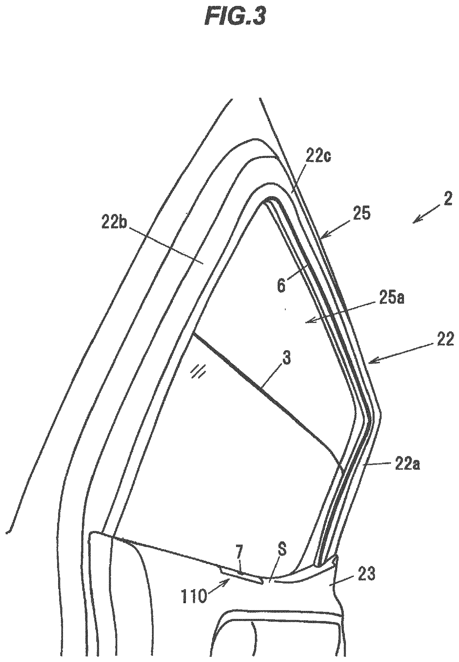

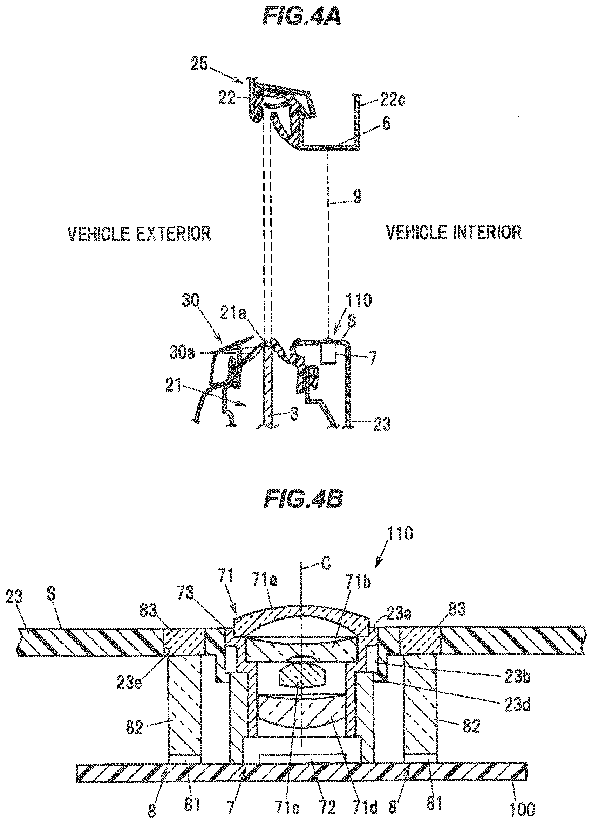

FIG. 2 is an explanatory diagram illustrating a door 2 when viewed from the upper side inside a vehicle. FIG. 3 is an explanatory diagram illustrating the door 2 when viewed from the lower-front side of the vehicle. FIG. 4A is cross-sectional view in which the door is cut in the vertical direction at the position including the camera 7. FIG. 4B is a view for explaining the installation position of the camera unit 110 shown in FIG. 4A.

As shown in FIGS. 2 to 4B, in the vehicle window glass raising/lowering device 1 of the present embodiment, the camera 7 has an optical system 71 including lenses 71a to 71d into which the invisible light (near infrared light) radiated from the light source 8 and reflected by the detection line 6 is incident, and an image pickup element 72 on which a subject image is formed by the optical system 71, and the optical system 71 is arranged at a position corresponding to the opening 23 a formed in an upper surface S of the door trim 23 so that an optical axis C of the optical system 71 passes through the opening 25.

In other words, in the present embodiment, the camera 7 is provided on an upper surface S of the door trim 23. The upper surface S of the door trim 23 here is an outer surface of the door trim 23 at a top edge portion and is a surface which is visible from above in a vertical direction. The upper surface S of the door trim 23 may be inclined with respect to the vehicle width direction (horizontal direction). The door trim 23 is generally curved such that the upper surface S has the highest portion in the vicinity of the window glass 3, i.e., in the vicinity of an exit slot 21a allowing the window glass 3 to come out from the storage portion 21, and slopes down as a distance from the window glass 3 increases. Thus, the upper surface S of the door trim 23 is an outer surface of the door trim 23 (the portion corresponding to the inner peripheral surface of the lower side of the window frame 25) in the vicinity of the window glass 3 (the exit slot 21a).

An opening 23a is formed closer to the vehicle interior than the exit slot 21a and the optical system 71 of the camera 7 is arranged so that the optical axis C is located closer to the vehicle interior side than the exit slot 21a. Although the camera 7 in this example is arranged so that the optical axis C of the optical system 71 coincides with the vertical direction when viewed in the cross section in FIG.4A, the optical axis C of the optical system 71 may be inclined with respect to the vertical direction in the front-back direction of the vehicle or in the vehicle width direction, and can be appropriately adjusted according to the installed position or desired imaging range of the camera 7.

In the present embodiment, the camera 7 is disposed in a hole 23 b provided at a position on the front side of the vehicle on the upper surface S of the door trim 23 (a position on the front side of the upper surface S of the door trim 23 facing the window glass 3). Here, as an example, a case where the camera 7 is provided on the upper surface S of the door trim 23 will be described, but the position at which the camera 7 is installed is not limited thereto.

The camera 7 has a columnar shape as a whole and has a flange 73 which is formed at a top end so as to protrude radially outward. The camera 7 is inserted into the hole 23b from the upper side of the door trim 23 and engages with a groove (not shown) provided in the camera 7 with a locking claw 23d provided on the peripheral edge below the hole 23b. As a result, the camera 7 is fixed to the door trim 23. Further, the structure for fixing the camera 7 to the door trim 23 and the insertion direction of the camera 7 are not particularly limited, and can be appropriately changed.

It is desirable to use a wide-angle lens as the optical system 71 of the camera 7 so that a foreign object can be detected in the range described above. As the optical system 71, an ultra-wide angle lens with a combination of four lenses 71a to 71d so as to have a viewing range of not less than 180°, or 190° taking into account the installation precision, in the front-back direction of the vehicle was used. The number of the lenses 71a to 71d constituting the optical system 71 is not limited to four, and the specific shapes of the respective lenses 71a to 71d are not limited to those shown in the drawings.

Meanwhile, to quickly detect the foreign object, the frame rate of the image pickup element 72 used is desirably as high as possible. In the present embodiment, a CMOS (Complementary MOS) image sensor is used as the image pickup element 72. The image pickup element 72 is mounted on the circuit board 100.

The light source 8 is configured such that the entire detection line 6 is exposed to radiation. Although two light sources 8 are used in this example to emit the invisible light (near infrared light) onto the entire detection line 6 arranged on an entire inner peripheral surface of the windowpane frame portion 22, the number of the light sources 8 is not limited thereto.

The two light sources 8 are disposed so as to sandwich the camera 7 from the front and back in the front-rear direction of the vehicle. In the present embodiment, the camera unit 110 is formed by integrating the two light sources 8 and the camera 7. By configuring the camera unit 110, it is easy to attach the camera 7 and the light source 8.

In the present embodiment, the light source 8 includes a light emitting element 81 mounted on the circuit board 100 and emitting the invisible light (near infrared light), a light guide member 82 for guiding the invisible light (near infrared light) from the light emitting element 81 and a diffusion plate 83 that diffuses and emits the invisible light (near infrared light) guided from the light emitting element 81 via the light guide member 82. The diffusion plate 83 diffuses and irradiates the invisible light from the light emitting element 81 in a wide range. The diffusion plate 83 is embedded in the through hole 23e formed in the upper surface S of the door trim 23. The light guide member 82 guides the invisible light (near infrared light) from the light emitting element 81 mounted on the circuit board 100 to the diffuser plate 83. The light guide member 82 is composed of, e.g., an optical waveguide and an optical fiber. The light emitting element 81 is composed of, e.g., a light emitting diode.

A detection surface 9 described hereinafter is a plane formed by connecting points between the optical system 71 of the camera 7 and the detection line 6 at which the foreign object when located thereon causes the blocked state. The detection surface 9 is substantially the same as a plane connecting the center of the optical system 71 (the center in the vehicle width direction, the height direction and the front-back direction of the vehicle) and the detection line 6, although depending on the specific configuration of the optical system 71. It should be noted that the entire detection surface 9 may not be a continuous surface. For example, when the detection line 6 is not continuous, the detection surface 9 is composed of plural surfaces.

Next, a specific configuration of the detection line 6 will be described.

The detection line 6 is formed along at least a part of an outer edge of the window glass 3 in a state where the door 2 and the window glass 3 are closed and is set on the inner side of the window glass 3 with respect to the window glass 3. In the present embodiment, the detection line 6 is set so as to be along the entire windowpane frame portion 22 and spaced from the windowpane 3 toward the vehicle interior.

The detection line 6 only needs to be set along the window frame 25, and may be set on the door 2 or on the vehicle body. Further, the detection line 6 may not be continuous, a part of which may be set on the door 2, and a part thereof may be set on the vehicle body.

In the present embodiment, as an example, a case where the detection line 6 is set on the door 2 side will be described. In this case, the detection line 6 is set on an inner peripheral edge surface of the entire windowpane frame portion 22, that is, an entire inner peripheral edge surface of a rear upright portion 22a, a front upright portion 22b, and a upper extended portion 22c, and is set to be separated from the window glass 3 toward the vehicle interior. The inner peripheral edge surface of the windowpane frame portion 22 is a surface facing the window glass 3 of the windowpane frame portion 22, and is located on the front side surface of the vehicle in the rear upright portion 22a, the rear surface of the vehicle in the front upright portion 22b, the lower surface of the upper extended portion 22c. That is, the inner peripheral edge surface of the windowpane frame portion 22 is a portion of the outer peripheral surface of the windowpane frame portion 22 in the vicinity of the window glass 3.

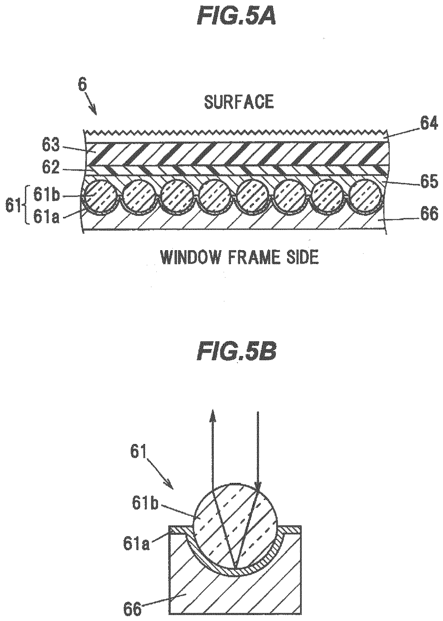

As shown in FIGS. 5A and 5B, in the present embodiment, the detection line 6 includes a reflection layer 61 made of a microbead-type retroreflective material, an absorption layer 62 formed on the incident side of the non-visible light of the reflection layer 61 and absorbing the visible light, a weathering layer 63 formed on a surface of the absorption layer 62 on an incident side of the invisible light, an antireflection layer 64 for preventing a regular reflection of the visible light incident from an outside of the weathering layer 63, a resin holding layer 65 formed between the reflection layer 61 and the absorption layer 62 and holding plural glass beads 61b of the reflection layer 61, and ,e.g., an adhesive layer 66 formed on the surface opposite to the holding layer 65 of the reflective layer 61. It should be noted that the absorption layer 62 is included in the "absorbing agent" in the present invention and the antireflection layer 64 is included in the "antireflection agent" in the present invention.

The retroreflective member reflects the incident light toward the light source section. A microbead-type retroreflective material using minute glass beads (a microbead) and a prism type retroreflective material using a prism on a small triangular pyramid are known. Among them, since the prism type retroreflective material is expensive, in the present embodiment, a microbead-type retroreflective material is used for the detection line 6.

The reflection layer 61 made of a microbead-type retroreflective material includes a reflective material layer 61a and glass beads 61b arranged apart from each other. The reflecting material layer 61a is formed by applying aluminum vapor deposition to plural glass beads 61b embedded in the holding layer 65, e.g. The adhesive layer 66 is formed on a surface opposite to the glass bead 61b of the reflecting material layer 61a made of an aluminum vapor-deposited layer. As a result, corrosion of aluminum deposition in the reflecting material layer 61a is prevented.

As shown in FIG. 5B, the light incident on the glass bead 61b is refracted at the surface of the glass bead 61b, reflected by the reflecting material layer 61a, refracted again at the surface of the glass bead 61b, and then reflected light is emitted in the light incidence direction.

The absorption layer 62 is formed at a position sandwiching the holding layer 65 between the absorption layer 62 and the reflection layer 61. In addition, by cutting the visible light, the absorption layer 62 prevents the driver from feeling dazzling by the visible light being retro-reflected by the reflection layer 61. The absorption layer 62 can be constituted, e.g., by coating a visible light absorbing dye that absorbs a specific wavelength, or by kneading it in an acrylic resin.

The weathering layer 63 is made of, e.g., PET (polyethylene terephthalate) or acrylic resin and is for protecting the absorption layer 62.

The antireflection layer 64 suppresses a regular reflection of the visible light. The antireflection layer 64 is formed by, e.g., coating the surface of the weathering layer 63. More specifically, the antireflection layer 64 is formed, e.g., by applying silica-doped coding, phase-separating or embossing the coating material. Alternatively, the antireflection layer 64 may be formed by embossing the surface of the weathering layer 63 or by sandblasting.

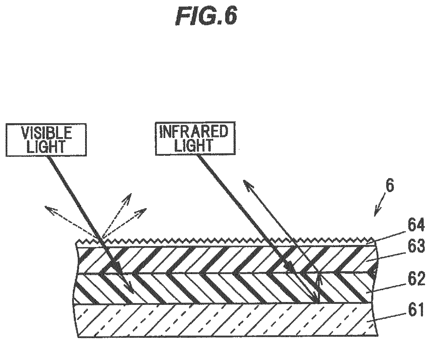

FIG. 6 is a cross-sectional view of a detection line shown for explaining the visible light and infrared light incident on the detection line 6. In FIG. 6, the glass beads 61b, the holding layer 65 and the adhesive layer 66 shown in FIG. 5 are not shown for convenience of explanation.

As shown in FIG. 6, the invisible light (infrared light) incident on the detection line 6 from the light source section 8 (shown in FIG. 4 (b)) passes through the antireflection layer 64, the weathering layer 63, and the absorption layer 62 and the retro-reflects on the surface of the reflection layer 61. The visible light coming from the outside (e.g., a headlight of a following vehicle) passes through the antireflection layer 64 and the weathering layer 63 and is absorbed by the absorption layer 62. In this manner, the detection line 6 is configured so that the visible light is absorbed and a retro-reflection does not occur, and infrared light emitted from the light source 8 causes the retro-reflection.

At this time, since the antireflection layer 64 is formed on the surface of the weathering layer 63 as a matting treatment, part of a reflected light that the visible light is reflected by the antireflection layer 64 is configured to diffusely reflect (broken line shown in FIG. 6). Thereby, the regular reflection on the surface of the antireflection layer 64 of visible light is reduced. That is, by increasing the diffuse reflection component of the total reflection amount of visible light on the surface of the antireflection layer 64, the regular reflection component is reduced. A part of the invisible light (infrared light) incident on the detection line 6 diffuses in the antireflection layer 64. As this diffusion amount, only a small amount which does not affect the retro-reflection in the reflection layer 61.

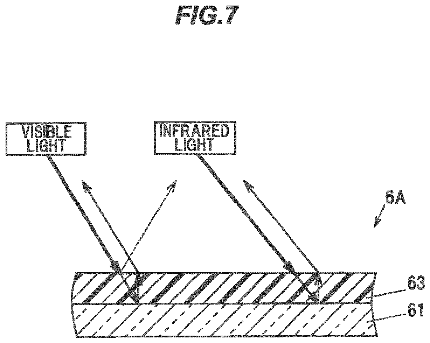

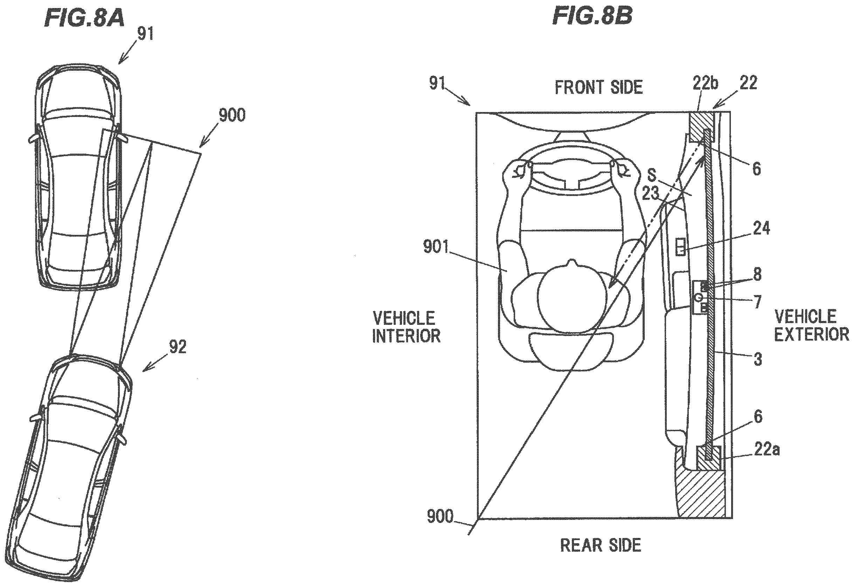

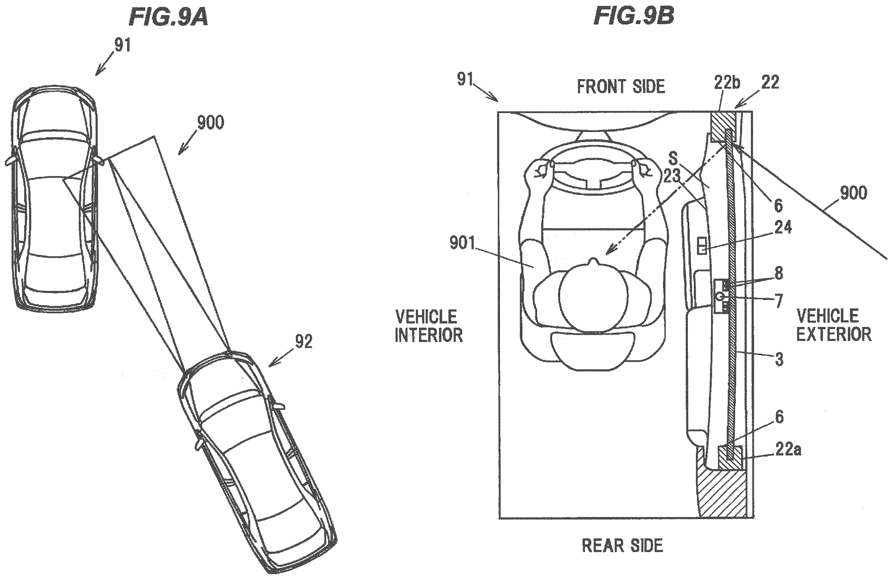

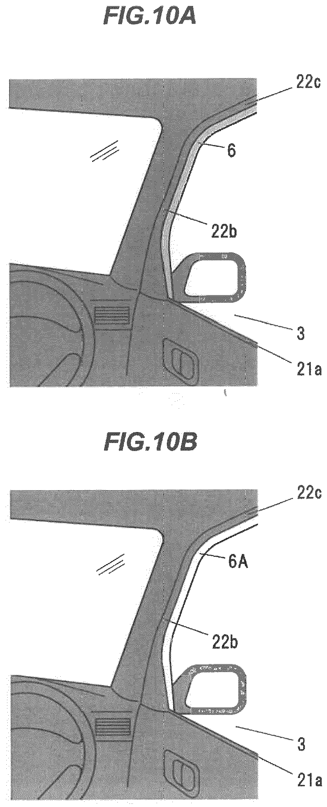

Next, the function and effect of the detection line 6 according to the present embodiment will be described with reference to FIGS. 7 and 10. Here, for the sake of convenience of explanation, the function effect of the detection line 6 will be described separately for the effect of the absorption layer 62 and the function effect of the antireflection layer 64. The function and effect of the absorption layer 62 will be described with reference to FIG. 8, and the function and effect of the antireflection layer 64 will be described with reference to FIG. 9.

FIG. 7 is a schematic cross-sectional view of the detection line 6A according to the comparative example. The detection line 6A according to the comparative example is configured in the same manner as the detection line 6 according to the present embodiment shown in FIGS. 5A and 5B, except that it does not include the absorption layer 62 and the antireflection layer 64. In FIG. 7, components having substantially the same functions as those described in this embodiment are denoted by the same reference numerals, and redundant description is omitted.

As shown in FIG. 7, the invisible light (infrared light) incident on the detection line 6A from the light source section 8 (shown in FIG. 4B) passes through the weathering layer 63 and retro-reflects on the surface of the reflection layer 61. The visible light that passes through the weathering layer 63 among visible light (e.g., a headlight 900 of a following vehicle to be described later) incident from the outside is retro-reflected on the surface of the reflection layer 61. On the other hand, most of the visible light incident from the outside is reflected regularly on the surface of the weathering layer 63 (broken line shown in FIG. 7). That is, in the comparative example, as compared with the present embodiment, the regular reflection component of the visible light incident on the detection line 6A is large and retro-reflects. The invisible light (infrared light) incident on the detection line 6A according to the comparative example passes through the weathering layer 63 and retro-reflects on the surface of the reflection layer 61.

Next, the function and effect of the absorption layer 62 of the detection line 6 according to the present embodiment will be described with reference to FIGS. 8A and 8B. FIG. 8A shows a state in a case where a vehicle 91 on which the detection line 6 is mounted is irradiated with the headlight 900 (visible light) from the other vehicle 92 positioned behind the vehicle 91 toward the inner surface of the door 2 of the vehicle 91. FIG. 8B is a cross-sectional view when the detection line 6 of the vehicle 91 shown in FIG. 8A and the peripheral portion thereof are cut along the vehicle longitudinal direction.

As shown in FIG. 8A, another vehicle 92 may irradiate the headlight 900 (visible light) toward the inner side surface of the door 2 of the vehicle 91 in a situation in which another vehicle 92 is positioned directly behind the vehicle 91 having the detection line 6 according to the present embodiment. Then, as shown in FIG. 8B, the headlight 900 is incident on the detection line 6 arranged at a position near the front upright portion 22b of the windowpane frame portion 22.

In this case, in the case of the present embodiment, the headlight 900 of the other vehicle 92 is not absorbed by the absorption layer 62 and is not retro-reflected by the reflection layer 61. However, in the case of the detection line 6A according to the comparative example, since the absorption layer 62 is not provided, the headlight 900 may be retro-reflected and retro-reflected toward the driver 901 (as shown by a two-dot chain line). As described above, since the detection line 6 according to the present embodiment includes the absorption layer 62, by preventing the retro-reflection of the visible light detection line 6 of the headlight 900, the influence of the driver on the field of vision is reduced.

Next, the function and effect of the antireflection layer 64 of the detection line 6 according to the present embodiment will be described with reference to FIGS. 9A and 9B. FIG. 9A shows a state in a case where the vehicle 91 on which the detection line 6 is mounted is irradiated with the headlight 900 (visible light) from the other vehicle 92 positioned at the rear of the vehicle 91 toward the outer side face of the door 2 of the vehicle 91. FIG. 9B is a sectional view of the detection line 6 of the vehicle 91 shown in FIG. 9A and its peripheral portion cut along the vehicle longitudinal direction.

As shown in FIG. 9A, the other vehicle 92 may irradiate the headlight 900 (visible light) toward the outer side face of the door 2 of the vehicle 91 in a situation where another vehicle 92 is positioned behind the vehicle 91 having the detection line 6 according to the present embodiment. Then, as shown in FIG. 9B, the headlight 900 is incident on the detection line 6 disposed at a position near the front upright portion 22b of the windowpane frame portion 22.

In this case, in the case of this embodiment, since the headlight 900 of the other vehicle 92 is diffusely reflected by the surface of the antireflection layer 64, the regular reflection component is reduced. However, in the case of the detection line 6A according to the comparative example, since the antireflection layer 64 is not provided, the regular reflection component of the headlight 900 is large (two-dot chain line shown in FIG. 9B). As described above, since the detection line 6 according to the present embodiment includes the antireflection layer 64, by reducing the regular reflection component of the visible light detection line 6 of the headlight 900, the influence on the driver's visual field is reduced.

FIG. 10A is an explanatory diagram showing the detection line 6 according to the present embodiment. FIG. 10B is an explanatory diagram showing a detection line 6A according to a comparative example. As shown in FIG. 10A, the detection line 6 according to the present embodiment shows that the reflected light is reduced more than the detection line 6A according to the comparative example shown in FIG. 10B. That is, the retro-reflection and the regular reflection in the detection line 6 are suppressed, and the influence on the driver's field of vision can be reduced.

Next, a control flow of the vehicle window glass raising/lowering device 1 will be described.

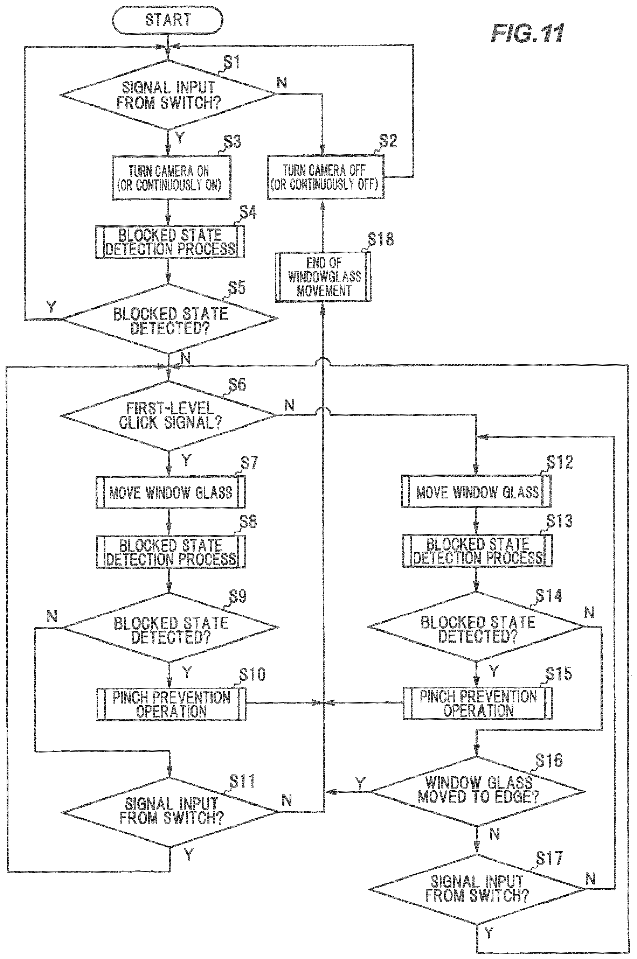

As shown in FIG. 11, the vehicle window glass raising/lowering device 1 is configured such that the control unit 5 firstly judges whether or not a signal is input from the switch 24 at Step S1. If judged as NO at Step S1, the control unit 5 controls the camera 7 and the light source section 8 to be turned off (or kept in the off-state) at Step S2 and the flow is allowed to return to Step S1.

If judged as YES at Step S1, the control unit 5 controls the camera 7 and the light source section 8 to be turned on (or kept in the on-state) at Step S3 and the flow is allowed to proceed to Step S4.

At Step S4, the detection unit 51 (i.e., the image processing section 51a and the blocked state determination section 51b) performs a processing of detecting the blocked state (i.e., a blocked state detection processing) based on the image captured by the camera 7. After that, at Step S5, the command cancellation unit 53 judges whether or not the blocked state is detected by the detection unit 51.

If judged as YES at Step S5, the command cancellation unit 53 determines that there is a risk of being pinched by the window glass 3 and the flow is allowed to return to Step S1 without moving the window glass 3 (i.e., the signal from the switch 24 is cancelled).

If judged as NO at Step S5, the control unit 5 judges whether or not the signal input from the switch 24 is a first-level click signal (a first-level move-down click signal or a first-level move-up click signal) at Step S6.

If judged as YES at Step S6, the control unit 5 instructs the drive unit 4 to control the movement of the window glass 3 at Step S7.

After that, at Step S8, the detection unit 51 performs a processing of detecting the blocked state (i.e., a blocked state detection processing) based on the image captured by the camera 7. After that, at Step S9, the pinching prevention unit 52 judges whether or not the blocked state is detected by the detection unit 51.

If judged as YES at Step S9, there is a risk of being pinched by the window glass 3. Accordingly, the pinching prevention unit 52 performs a pinch prevention operation such as halting the movement of the window glass 3 or lowering the window glass 3 to the safe position at Step S10. After that, the control unit 5 terminates the movement of the window glass 3 at Step S18 and the flow is allowed to return to Step S2. As described above, in the present embodiment, if the blocked state is detected while the first-level click signal is being input from the switch 24, the movement of the window glass 3 is terminated after performing the pinch prevention operation.

If judged as NO at Step S9, there is no risk of being pinched by the window glass 3. Accordingly, the control unit 5 judges whether or not a signal is input from the switch 24 at Step S11. If judged as NO at Step S11, this means that an operation on the switch 24 is finished. Accordingly, the control unit 5 terminates the movement of the window glass 3 at Step S18 and the flow is allowed to return to Step S2. If judged as YES at Step S11, the flow is allowed to return to Step S6 and the window glass 3 is kept moving.

On the other hand, if judged as NO at Step S6, i.e., if a second-level click signal (a second-level move-down click signal or a second-level move-up click signal) is input from the switch 24, the control unit 5 instructs the drive unit 4 to control the movement of the window glass 3 at Step S12.

After that, at Step S13, the detection unit 51 performs a processing of detecting the blocked state (i.e., a blocked state detection processing) based on the image captured by the camera 7. After that, at Step S14, the pinching prevention unit 52 judges whether or not the blocked state is detected by the detection unit 51.

If judged as YES at Step S14, there is a risk of being pinched by the window glass 3. Accordingly, the pinching prevention unit 52 performs a pinch prevention operation at Step S15. After that, the movement of the window glass 3 is terminated at Step S18 and the flow is allowed to return to Step S2. In other words, in the present embodiment, if the second-level click signal is input from the switch 24 and the blocked state is detected during when the window glass 3 is moving, the movement of the window glass 3 is terminated after performing the pinch prevention operation.

If judged as NO at Step S14, there is no risk of being pinched by the window glass 3. Accordingly, the control unit 5 judges whether or not the window glass 3 is moved to an edge (to the top or bottom end) at Step S16. If judge as YES at Step S16, the control unit 5 terminates the movement of the window glass 3 at Step S18 and the flow is allowed to return to Step S2. Meanwhile, the positional information of the window glass 3 may be obtained by using a rotational pulse generated by a Hall IC incorporated in the motor 41, or using current ripple.

If judged as at Step S16, it is judged whether or not a new signal is input from the switch 24 (i.e., whether or not a new signal is input after the second-level click signal is input) at Step S17. If judged as YES at Step S17, the flow is allowed to return to Step S6. If judged as NO at Step S17, the flow is allowed to return to Step S12 and the window glass 3 is kept moving. That is, if the second-level click signal is input, the window glass 3 is kept moving until the blocked state is detected, the window glass 3 is moved to an edge or a new signal is input from the switch 24.

As described above, according to the detection line 6 having the configuration described in FIGS. 1 to 11, it is possible to prevent the retro-reflection and the regular reflection of the visible light while ensuring the retro-reflection of infrared light as detection light for detecting the shielding state of the detection line 6.

### (Functions and Effects of the embodiment)

As described above, in the vehicle window glass raising/lowering device 1 according to the present embodiment, the detection line 6 is formed of a retroreflective material. With such a configuration, the camera 7 can efficiently detect the invisible light. As a result, it is possible to realize the vehicle window glass raising/lowering device 1 capable of reliably detecting the foreign object having a possibility of being caught.

Further, in the present embodiment, since the detection line 6 is formed of a relatively inexpensive microbead-type retroreflective material, the cost can be suppressed.

In the present embodiment, the retroreflective material of the detection line 6 is formed with an antireflection layer 64 that absorbs the visible light incident from the outside. Thus, since the visible light is prevented from the retroreflecting at the reflection layer 61, it is possible to prevent the visible light from obstructing the visibility of the driver. That is, in the case where the absorption layer 62 is not provided, there is a possibility that the visible light which enters the reflection layer 61 and retro-reflected may hinder the driver's visibility, but such situation is prevented. That is, the safety can be improved.

In the present embodiment, an antireflection layer 64 is formed on the retroreflective material of the detection line 6 to prevent reflection of the incident light incident from the outside. Thereby, the regular reflection component of the visible light on the detection line 6 can be reduced. In other words, it is possible to prevent the visibility of the driver from being obstructed by regular reflection caused by an unintended light source (such as a headlight of the following vehicle), and it is possible to further enhance the safety.

Although the embodiment of the present invention has been described above, the embodiment described above does not limit the invention according to the claims. It should also be noted that not all combinations of features described in the embodiments are indispensable for means for solving the problem of the invention. Further, the present invention can be carried out by appropriately deforming and implementing within the scope not deviating from the gist thereof.

In the above embodiment, only the case where the weathering layer 63 is formed on the surface of the antireflection layer 64 has been described. However, since the weathering layer 63 is not an essential component in the present invention, e.g., the antireflection layer 64 may be formed directly on the surface of the absorption layer 62.

In the above embodiment, only the case where the reflection layer 61, the absorption layer 62, the weathering layer 63, the antireflection layer 64 and the holding layer 65 are formed as a single independent layer has been described. However, the present invention is not limited thereto, and it may be configured so as to be included in another layer.

More specifically, in the above-described embodiment, the absorption layer 62 and the antireflection layer 64 are separated layers, but, for example, it is also possible to form a layer to include the function of the antireflection layer 64 in the absorption layer 62 by embossing the surface of the absorption layer 62 or applying sand blasting. The "antireflection agent" in the present invention also includes those obtained by stamping or sandblasting the surface of the independent absorption layer 62 as described above.

Further, the absorption layer 62 may be formed as a holding layer for holding the glass beads 61b. Thereby, the absorption layer 62 can replace the holding layer 65.

In the above-described embodiment, the case where the glass beads 61b are used for the reflection layer 61 has been described. However, the present invention is not limited thereto, and e.g., acryl beads may be used instead of the glass beads 61b. In this case, by incorporating a visible light absorbing dye into the acrylic beads, it is also possible to include an absorption agent for absorbing visible light incident from the outside into the reflection layer 61.

Also, although not mentioned in the above embodiment, the vehicle window glass raising/lowering device 1 is provided with a safety device for determining various kinds of safety operations such as judging that the foreign object is caught by the window glass 3 and automatically reversing and lowering the moving direction of the window glass 3 when the number of revolutions of the motor 41 is monitored and the load increases during the ascent of the window glass 3 and the revolution number of the motor 41 decreases.

### Reference Signs List

1 VEHICLE WINDOW GLASS RAISING/LOWERING DEVICE
3 WINDOW GLASS
4 DRIVE UNIT
5 CONTROL UNIT
51 DETECTION UNIT (DETECTION MEANS)
52 PINCHING PREVENTION UNIT (PINCHING PREVENTION MEANS)
6 DETECTION LINE
61 REFLECTION LAYER
62 ABSORPTION LAYER
63 WEATHERING LAYER
64 ANTIREFLECTION LAYER
7 CAMERA
71 OPTICAL SYSTEM
8 LIGHT SOURCE SECTION
25 WINDOW FRAME (FRAME PORTION)

## Claims

1. A vehicle window glass raising/lowering device, comprising:
a drive unit arranged on a vehicle door to move a window glass in a vertical direction;
a control unit for controlling the drive unit;
a detection line arranged on a vehicle interior side of the window glass and along at least a portion of an outer edge of the window glass in a state where the door and the window glass are closed;
a light source comprising a light emitting element to emit an invisible light to the detection line; and
a camera comprising a lens on which the invisible light emitted from the light source and reflected by the detection line is incident,
wherein the control unit comprises a pinching prevention means that causes the drive unit to perform a pinch prevention operation for preventing pinching by the window glass based on an image taken by the camera, and
wherein the detection line comprises a reflection layer to reflect an incident light toward the light source.

2. The vehicle window glass raising/lowering device according to claim 1, wherein the detection line comprises an absorption layer that absorbs a visible light inputted from an outside.

3. The vehicle window glass raising/lowering device according to claim 1 or 2, where the detection line comprises an antireflection layer that prevents a reflection of a visible light inputted from an outside.

4. The vehicle window glass raising/lowering device according to claim 1, where the reflection layer comprises an absorption agent that absorbs a visible light inputted from an outside.

5. The vehicle window glass raising/lowering device according to claim 2, wherein the absorption layer comprises an antireflection agent that prevents a reflection of the visible light inputted from the outside.

6. A vehicle door, comprising the vehicle window glass raising/lowering device according to any one of claims 1 to 5.

7. A vehicle, comprising the vehicle door according to claim 6.
